(19) **Europäisches Patentamt / European Patent Office / Office européen des brevets**

(11) **EP 3 036 296 B1**

(12) # EUROPÄISCHE PATENTSCHRIFT

(45) Veröffentlichungstag und Bekanntmachung des Hinweises auf die Patenterteilung:
**12.07.2023   Patentblatt 2023/28**

(21) Anmeldenummer: **14744854.2**

(22) Anmeldetag: **30.07.2014**

(51) Internationale Patentklassifikation (IPC):
***C09D 183/04*** *(2006.01)*

(52) Gemeinsame Patentklassifikation (CPC):
(C-Sets verfügbar)
**C09D 183/04;** C08G 77/18; C08G 77/80     (Forts.)

(86) Internationale Anmeldenummer:
**PCT/EP2014/066374**

(87) Internationale Veröffentlichungsnummer:
**WO 2015/024748 (26.02.2015 Gazette 2015/08)**

(54) **BESCHICHTUNGSMASSEN**

COATING COMPOUNDS

MATIÈRES DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2013   DE 102013216781**

(43) Veröffentlichungstag der Anmeldung:
**29.06.2016   Patentblatt 2016/26**

(73) Patentinhaber: **Evonik Operations GmbH**
**45128 Essen (DE)**

(72) Erfinder:
* **KLOTZBACH, Thomas**
**45257 Essen (DE)**
* **FIEDEL, Michael**
**45131 Essen (DE)**

* **FERENZ, Michael**
**45147 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A2- 1 142 929     US-A1- 2011 118 406**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
C09D 183/04, C08L 83/00, C08K 5/057;
C09D 183/04, C08L 83/00, C08K 5/31;
C09D 183/04, C08L 83/00, C08K 5/3465

**Beschreibung**

Die vorliegende Erfindung betrifft Beschichtungsmassen enthaltend A) alkoxyfunktionelle Arylpolysiloxane und/oder alkoxyfunktionelle Aryl-Alkylpolysiloxane, B) mindestens einen Vernetzungskatalysator ausgewählt aus der Gruppe der Guanidine oder Amidine und optional C) mindestens ein Alkoxysilan und D) optional weitere Hilfs- und Zusatzstoffe, wobei der Anteil der Alkoxygruppen mindestens 10 Gew.-%, bezogen auf die Summe der Komponenten A) und C) beträgt.

Hochtemperaturanwendungen auf einem rein physikalischen Trocknungsprinzip beruhend, erfordern meist ein Einbrennen des Lackfilmes bei erhöhten Temperaturen, um die nötige chemische und physikochemische Beständigkeit zu erzielen. Dies ist besonders nachteilig, da aufgrund der limitierenden Ofengröße nicht alle Werkstoffe forciert getrocknet werden können. Weiterhin wird es mit zunehmender Objektgröße immer schwieriger eine für den Einbrennvorgang benötigte Objekttemperatur von 150 - 250 °C zu erreichen.

Gemäß dem Stand der Technik sind Silikonharzzusammensetzungen bekannt, die im Wesentlichen methoxyfunktionelle Methylsilikonharze enthalten. Diese werden z. B. mit Titan(tetrabutoxid) zur Aushärtung gebracht. Ein solches Verfahren ist zum Beispiel in EP 0802 236 B1 beschrieben. US 2011/118406 A1 offenbart Polysiloxanbeschichtungszusammensetzungen auf Basis von Alkoxysiloxanen mit bis 20 Gew. % an Methoxyeinheiten. Die Beispiele offenbaren Beschichtungszusammensetzungen aus Methylphenylmethoxysilan mit 15-18 Gew.% an Methoxyeinheiten, Zinnkatalysatoren und Aminopropyltrimethoxysilan.

Alkoxyfunktionelle Methylsilikonharze wie z. B. SILRES® MSE 100 werden hierbei bereits seit vielen Jahren in der Kombination mit verschiedenen Härtungskatalysatoren für bei Raumtemperatur aushärtende hochtemperaturbeständige Beschichtungen für Temperaturbereiche bis zu 650 °C eingesetzt.

Trotz der schnellen Aushärtungsgeschwindigkeit der methoxyfunktionellen Methylpolysiloxanharze und der Hitzebeständigkeit haben diese für den Lackformulierer auch einige anwendungstechnische Nachteile. So zeigen die Methylsilikonharze eine schlechte Verträglichkeit mit anderen organischen Verbindungen und sind außerdem sehr hart und spröde, was sich besonders bei Temperaturbelastung der ausgehärteten Beschichtung zeigt. Aus diesem Grunde sind die meisten Beschichtungen für die Hochtemperatur-anwendung durch geeignete plättchenförmige Füllstoffe, wie z. B. Glimmer, und anorganische temperaturbeständige Farbpigmente flexibilisiert, damit die starken Volumenänderung des Substrats beim Aufheizen und Abkühlen kompensiert werden können. Des Weiteren zeigen manche Methyl-Silikonharze auch einen negativen Einfluss auf das Beschichtungssystem, beispielsweise kann es durch den PDMS-Charakter (PDMS = Polydimethylsiloxan) der Methylsiloxane zu Oberflächenstörungen wie zum Beispiel der sogenannten Kraterbildung kommen.

Die Unverträglichkeit zeigt sich z. B. auch dadurch, dass gewisse Katalysatoren für alkoxyfunktionelle Methylsilikonharze als Vernetzungskatalysator völlig unbrauchbar sind, da es aufgrund einer schlechten Mischbarkeit mit dem Bindemittel nicht zu einer Aushärtung kommt. Aus diesem Grund werden für Methylsilikonharze mehrheitlich Titanate, wie z. B. Tetra-n-ButylTitanat eingesetzt.

Aufgabe der vorliegenden Erfindung ist daher die Bereitstellung von neuen Lacksystemen, die zu stabilen Beschichtungen führen und die oben genannten Nachteile nicht aufweisen. Demgemäß sind ein erster Gegenstand der vorliegenden Erfindung Beschichtungsmassen enthaltend A) alkoxyfunktionelle Arylpolysiloxane und/oder alkoxyfunktionelle Aryl-Alkylpolysiloxane, B) mindestens einen Vernetzungskatalysator ausgewählt aus der Gruppe der Guanidine oder Amidine und optional C) mindestens ein Alkoxysilan und D) optional weitere Hilfs- und Zusatzstoffe, wobei der Anteil der Alkoxygruppen mindestens 10 Gew.-%, bezogen auf die Summe der Komponenten A) und C) beträgt.

Das Wortfragment "Poly" umfasst im Zusammenhang mit dieser Erfindung nicht nur ausschließlich Verbindungen mit zumindest drei Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Im Umfang der Erfindung werden unter Arylpolysiloxanen oder Alkypolysiloxanen Verbindungen verstanden, die neben Si-C verknüpften Aryl- oder Alkylgruppen noch weitere Si-C verknüpfte Gruppen enthalten können. Diese Definition ist sinngemäß auch auf Begriffe wie Phenylpolysiloxan und Phenylharz anzuwenden, auch wenn diese Begriffe Bestandteile weiterer Begriffe sind.

Alkoxyfunktionell im Sinne der vorliegenden Erfindung bedeutet, dass im Polysiloxan Alkylgruppen über Sauerstoff an Silicium gebunden vorliegen (Si-O-R-Gruppen). Im Rahmen der vorliegenden Erfindung werden synonym auch Hydroxygruppen (Si-OH-Gruppen) verstanden. Vorzugsweise bedeutet alkoxyfunktionell die Anwesenheit von Si-O-R-Gruppen.

Die erfindungsgemäßen Systeme haben den Vorteil dass sie bei Einsatz geeigneter Härtungskatalysatoren vergleichbar schnell wie die oben beschriebenen Methylpolysiloxanharze bei Raumtemperatur auskondensieren können, jedoch die Vorteile der höheren Flexibilität und besonders der hervorragenden Kompatibilität mit kohlenstoffbasierten organischen Bindemitteln, Additiven und anderen Komponenten in sich vereinigen.

Die erfindungsgemäßen Beschichtungsmassen enthalten alkoxyfunktionelle Arylpolysiloxane und/oder alkoxyfunktionelle Aryl-Alkylpolysiloxane.

Die erfindungsgemäß enthaltenen alkoxyfunktionellen Arylpolysiloxane und/oder alkoxyfunktionellen Aryl-Alkylpolysiloxane sind insbesondere jene der allgemeinen Formel (I):

$$R_aSi(OR')_bO_{(4-a-b)/2} \qquad (I)$$

worin $0<a<2$, $0<b<2$ und $a+b<4$ und

R ausgewählt ist aus einer aromatischen Gruppierung mit 6 bis 20 Kohlenstoffatomen ist oder aus einer Mischung aus einer aromatischen Gruppierung mit 6 bis 20 Kohlenstoffatomen und einer Alkylgruppe bestehend aus 1 bis 8 Kohlenstoffatomen, und

R' eine Alkylgruppe bestehend aus 1 bis 8 Kohlenstoffatomen ist.

Als Alkylgruppen R eignen sich beispielsweise Methyl-, Ethyl-, Propyl-, Isopropyl-, n-Butyl-, sek-Butyl- oder t-Butyl-Gruppen. Eine aromatische Gruppierung R kann beispielsweise eine Phenyl-Gruppierung sein. Vorzugsweise ist R ausgewählt aus Methyl- oder Phenyl-Gruppen bzw. Mischungen aus Methyl- und Phenyl-Gruppen, das heißt in einem Polysiloxan sind sowohl Methyl- als auch Phenylgruppen anwesend.

Als Alkylgruppen R' eignen sich beispielweise Methyl-, Ethyl-, Propyl-, Isopropyl-, n-Butyl-, sek-Butyl oder t-Butyl-Gruppen. Vorzugsweise ist R' ausgewählt aus Methyl- oder Ethylgruppen. Letztere eignen sich besonders für als HAPS-free (Hazardous Air Pollutant Substance) bezeichnete Phenylpolysiloxane oder Phenyl-Alkylpolysiloxane, die keine Lösemittel wie Toluol, Xylol oder Benzol enthalten und außerdem bei der bereits bei Raumtemperatur stattfindenden Hydrolyse-Kondensations-Vernetzung kein Methanol freisetzen, sondern nur Ethanol.

Verbindungen der Formel (I) werden häufig auch als Silikonharze bezeichnet. Bei dieser Formel handelt es sich um die kleinste Einheit der gemittelten Strukturformel des Silikonpolymers. Die Anzahl der Wiederholungen ergibt sich aus dem über GPC bestimmten Zahlenmittel $M_n$.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben. Des Weiteren beschreiben EP 1142929 und EP 0157318 ebenfalls die Herstellung von Silikonharzen.

In einer ersten bevorzugten Ausführungsform der vorliegenden Erfindung handelt es sich bei Komponente A) um alkoxyfunktionelle Aryl(alkoxysiloxane), insbesondere um alkoxyfunktionelle Phenylpolysiloxane (Phenylsilikonharze) mit R = Ph, gemäß der allgemeinen Formel (I).

Der Anteil der Alkoxygruppen beträgt mindestens 5 Gew.-%, bezogen auf das Polysiloxan, vorzugsweise 10 - 70 Gew.-%, besonders bevorzugt 10 - 40 Gew.-%, und ganz besonders bevorzugt 15 - 25 Gew.-%.

Das Molekulargewicht $M_w$ der Aryl(alkoxysiloxane) beträgt insbesondere 50 - 10.000 g/mol, bevorzugt 200 - 3.000 g/mol, besonders bevorzugt 800 - 1.700 g/mol

Das Molekulargewicht $M_n$ der Aryl(alkoxysiloxane) beträgt insbesondere 700 - 900 g/mol.

In einer weiteren bevorzugten Ausführungsform der vorliegenden Erfindung handelt es sich bei Komponente A) der erfindungsgemäßen Beschichtungsmassen um alkoxyfunktionelle Aryl-Alkylpolysiloxane.

Das Molekulargewicht $M_w$ der Aryl-Alkylpolysiloxane beträgt insbesondere 50 - 200.000 g/mol, bevorzugt 1.000 - 50.000 g/mol, besonders bevorzugt 1.500 - 3.500 g/mol.

Das Molekulargewicht $M_n$ der Aryl-Alkylpolysiloxane beträgt insbesondere 800 - 1.200 g/mol.

In einer weiteren bevorzugten Ausführungsform der vorliegenden Erfindung handelt es sich bei Komponente A) der erfindungsgemäßen Beschichtungsmassen um alkoxyfunktionelle Phenyl-Methylpolysiloxane (Phenylmethylsilikonharze) mit R = Ph, Me, gemäß der allgemeinen Formel (I). Insbesondere bevorzugt sind die Alkoxygruppen ausgewählt aus Methoxy- oder Ethoxy-Gruppen.

Bei den lösemittelfreien Phenylmethylsilikonharzen beträgt der Anteil der Alkoxygruppen, insbesondere der Methoxy- bzw. Ethoxy-gruppen, mindestens 10 Gew.-%, bezogen auf das Polysiloxan, vorzugsweise 10 - 40 Gew.-%, besonders bevorzugt 10 - 30 Gew.-%, und ganz besonders bevorzugt 13 - 25 Gew.-%.

Das Phenyl: Methyl-Verhältnis liegt in der Regel im Bereich von 1 : 0,1 bis 0,1 : 1, vorzugsweise im Bereich von 0,4 : 1 bis 1 : 1.

Im Rahmen der vorliegenden Erfindung wird als Synonym für ein Phenylmethylpolysiloxan auch ein Monomerblend, beispielsweise aus entsprechenden Phenyltrialkoxysilanen und Methyl-Phenyl-Dialkoxysilanen, verstanden. Als Beispiel eignet sich eine Mischung aus ca. 67 Gew.-% Phenyltrimethoxysilan und etwa 28 Gew.-% Methyl-Phenyl-Dimethoxysilan als Monomerblend im Sinne der vorliegenden Erfindung.

Die genannten Polysiloxane, können entweder als lösemittelfreies 100 %-Harz oder auch in Form einer entsprechenden Harzlösung vorliegen, insbesondere im Falle der alkoxyfunktionellen Phenylmethylpolysiloxan-Harze mit R = Ph, Me, beispielsweise methoxyfunktionellen Phenylmethylpolysiloxan-Harze, aber auch ethoxyfunktionellen Phenylmethylpolysiloxan-Harze. Bevorzugt handelt es sich bei dem Lösungsmittel um Xylol, Toluol, Butylacetat oder Methoxypropylacetat (MPA).

Durch den Zusatz von entsprechenden Lösemitteln, lassen sich die Viskositäten der Polysiloxane soweit reduzieren, dass sie sich zur Herstellung von Beschichtungssystemen leichter handhaben lassen.

Die Harzlösungen weisen im Falle von methoxyfunktionellen Phenylmethylpolysiloxan-Harzen insbesondere einen Gehalt von 30 - 99,99 Gew.-% Silikonharz, bevorzugt 60 - 99,99 Gew.-%, besonders bevorzugt $\geq$ 80 Gew.-%, bezogen auf die Lösung auf. Im Falle des Einsatzes von Harzlösungen beträgt das Molekulargewicht $M_w$ der methoxyfunktionellen Phenylmethylpolysiloxan-Harze insbesondere 50 - 200.000 g/mol, bevorzugt 3.000 - 120.000 g/mol und besonders bevorzugt 4.000 - 70.000 g/mol.

Das Molekulargewicht $M_n$ der methoxyfunktionellen Phenylmethylpolysiloxan-Harze beträgt insbesondere 1.500 - 3.900 g/mol.

Im Falle von Harzlösungen von ethoxyfunktionellen Phenylmethylpolysiloxan-Harzen liegt der Feststoffgehalt insbesondere im Bereich von 50 - 99,99 Gew.-%, bevorzugt 80 - 99,99 Gew.-% und besonders bevorzugt $\geq$ 90 Gew.-%, bezogen auf die Harzlösung. Der Anteil an Alkoxygruppen beträgt in diesem Falle insbesondere 10 - 70 Gew.-%, bevorzugt 10 - 30 Gew.-%, besonders bevorzugt 10 - 15 Gew.-%. Das Molekulargewicht $M_w$ beträgt in diesem Falle insbesondere 50 - 10.000 g/mol, bevorzugt 200 - 8.000 g/mol, besonders bevorzugt 500 - 2.000 g/mol.

Das Molekulargewicht $M_n$ der ethoxyfunktionellen Phenylmethylpolysiloxan-Harze beträgt insbesondere 800 - 1.200 g/mol.

Der Anteil der Komponente A) in der erfindungsgemäßen Beschichtungsmasse beträgt insbesondere 10 bis 80 Gew.-%, vorzugsweise 20 bis 50 Gew.-%, bezogen auf die Beschichtungsmasse. Die vorab genannten Harze können im Rahmen der vorliegenden Erfindung auch als Mischungen mehrerer Harze eingesetzt werden.

Alle oben beschriebenen Harze, die nicht schon selbst eine ausreichend hohe Alkoxyfunktionalität aufweisen, so dass der Anteil der Alkoxygruppen mindestens 10 Gew.-%, bezogen auf die Summe der Komponenten A) und C) beträgt, müssen durch Kombination mit weiteren Alkoxysilanen oder auch Methylsilikonharzen entsprechender Alkoxyfunktionalität als Komponente C) versetzt werden. Somit weisen in einer Ausführungsform der vorliegenden Erfindung die Harze der Komponente A) einen Anteil an Alkoxygruppen von mehr als 10 Gew.-% auf, und müssen somit nicht zwingend mit Alkoxysilanen der Komponente C) versetzt werden. Beträgt der Anteil der Alkoxygruppen der Alkoxysilane weniger als 10 Gew.-%, so muss mindestens ein Alkoxysilan als Komponente C) zugesetzt werden, bis der Anteil der Alkoxygruppen mindestens 10 Gew.-%, bezogen auf die Summe der Komponenten A) und C) beträgt.

Auf diese Art wird erreicht, dass die bei Raumtemperatur und einer relativen Luftfeuchtigkeit im Bereich von 5 - 100 % stattfindende, katalysierte chemische Vernetzung durch Hydrolyse-Kondensations-Reaktionen mit einer ausreichend hohen Geschwindigkeit stattfindet und zu Beschichtungen mit einer hohen Härte führt, die mit nur physikalisch trocknenden Silikonharzbeschichtungen nicht erreicht werden können.

Als Alkoxysilane C) eignen sich insbesondere solche der Formel (II)

$$R_aSi(OR')_b \qquad (II)$$

$$0 \leq a \leq 2, \ 0 \leq b \leq 4, \quad a + b = 4$$

worin R eine Alkylgruppe aus 1 bis 8 Kohlenstoffatomen, eine Cycloalkylgruppe aus 3 bis 8 Kohlenstoffatomen oder eine aromatische Gruppierung mit 6 bis 20 Kohlenstoffatomen ist und R' eine Alkylgruppe mit 1 bis 8 Kohlenstoffatomen ist.

Im Falle von Alkylgruppen sind diese insbesondere ausgewählt aus Methyl-, Ethyl-, Propyl-, Isopropyl-, n-Butyl-, sek-Butyl- oder t-Butyl-Gruppen.

Als Alkoxysilane eignen sich insbesondere Tetramethoxysilan, Tetraethoxysilan, Phenyltriethoxysilan, Phenyltrimethoxysilan, Cyclohexyltrimethoxysilan, Cyclohexyltriethoxysilan, Cyclohexylmethyldimethoxysilan, Cyclohexylmethyldiethoxysilan, Propyltrimethoxysilan, Propyltriethoxysilan, Dimethyldimethoxysilan, Dimethyldiethoxysilan, Dimethoxyphenylmethylsilan und Diethoxyphenylmethylsilan.

Die Alkoxysilane können, je nach Bedarf, in Mengen von 10 - 80 Gew.-%, bevorzugt 20 - 60 Gew.-% und besonders bevorzugt mit 30 - 50 Gew.-%, bezogen auf die Mischung aus Komponenten A) und C) eingesetzt werden.

Eine weitere wesentliche Komponente der erfindungsgemäßen Beschichtungsmasse ist der mindestens eine Vernetzungskatalysator B).

Der Vernetzungskatalysator ist aus der Gruppe der Guanidine wie z. B. 1,1,3,3-Tetramethylguanidin oder Amidine wie z. B. 1,8-Diazabicyclo[5.4.0.]-7-undecen, 1,4-Diazabicyclo[2, 2, 2]octan, und 1,5-Diazabicyclo[4.3.0]non-5-en ausgewählt.

Um eine hinreichend schnelle Härtungsgeschwindigkeit des Katalysators zu gewährleisten ist es von großer Bedeutung, dass dieser in der zu härtenden Bindemittelmatrix löslich bzw. mit diesem gut mischbar ist und darüber hinaus gut verteilt vorliegt. Es ist naheliegend, dass sowohl die Molmasse des Katalysators als auch dessen chemische Struktur einen Einfluss auf das Löslichkeits- bzw. Mischbarkeitsverhalten haben.

Insbesondere bevorzugt enthält der Vernetzungskatalysator B) keine Siliziumatome, das heißt es handelt sich nicht um Alkoxysilyl-, Silyloxy- oder Silyl-Gruppen-enthaltende Verbindungen. Der Vernetzungskatalysator B) ist ausgewählt aus der Gruppe der Guanidine oder Amidine. Hier seien insbesondere 1,1,3,3-Tetramethylguanidin (TMG) und 1,8-Diazabicyclo[5.4.0.]-7-undecen (DBU) als besonders bevorzugte Katalysatoren genannt. Insbesondere bevorzugt werden 1,1,3,3-Tetramethylguanidin sowie 1,8-Diazabicyclo[5.4.0.]-7-undecen (DBU), des weiteren Mischungen aus 1,1,3,3-Tetramethylguanidin oder 1,8-Diazabicyclo[5.4.0.]-7-undecen (DBU) mit Tetra-n-butoxytitanat (TnBT) eingesetzt.

Der Anteil der Komponente B) in der erfindungsgemäßen Beschichtungsmasse beträgt insbesondere 0,1 bis 15,0 Gew.-%, vorzugsweise 0,1 bis 3,0 Gew.-%, bezogen auf die Komponente A) bzw. auf die Summe der Anteile der Komponenten A) und C).

Im Stand der Technik werden in der Regel methoxyfunktionelle Methylsilikonharze mit Vernetzungskatalysatoren aus der Gruppe der Titanate wie z. B. Tetra-n-butoxytitanat eingesetzt. Diese sind bei methoxyfunktionellen Phenylmethylpolysiloxanen sowie deren Lösungen entweder überhaupt nicht aktiv oder bestenfalls nur ein Zehntel so schnell in der Aushärtung wie man es vom Stand der Technik bei den methoxyfunktionellen Methylsilikonharzen kennt. Bei den methoxyfunktionellen Phenylmethylsilikonharzen eignen sich besonders Katalysatoren aus der Gruppe der Guanidine oder Amidine, und hierbei besonders das 1,1,3,3-Tetramethylguanidin sowie das 1,8-Diazabicyclo[5.4.0.]-7-undecen (DBU). Im Vergleich zum Tetramethylguanidin (TMG) ist DBU als noch stärkerer Katalysator einzustufen. Auch sind hier die Kombinationen aus TnBT mit TMG oder TnBT mit DBU besonders gut geeignet. Bei den HAPS-freien, d.h. insbesondere bei ethoxyfunktionellen Phenylmethylpolysiloxanen bzw. Harzlösungen eignen sich ebenfalls die Katalysatoren TMG und DBU, wobei hier bei den deutlich weniger reaktiven Ethoxygruppen das DBU klare Vorteile bezüglich der Vernetzungsgeschwindigkeit bringt.

Weiterhin kann die Beschichtungsmasse der vorliegenden Erfindung weitere Hilfs- und Zusatzstoffe als Komponente D) enthalten. Insbesondere sind die weiteren Hilfs- und Zusatzstoffe ausgewählt aus der Gruppe der Verdünner, Katalysatoren, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner, Komplexbildner, Netzmittel, Co-Vernetzer, Sprühhilfsmittel, pharmakologische Wirkstoffe, Duftstoffe, Radikalfänger und/oder andere Zuschlagstoffe.

Die Wahl eines geeigneten Lösungsmittels kann dabei erfolgen aus der Gruppe der Alkane, Alkene, Alkine, Benzol und Aromaten mit aliphatischen und aromatischen Substituenten, Carbonsäureester, lineare und cyclische Ether, völlig symmetrisch gebaute Moleküle, wie Tetramethylsilan oder analog Kohlenstoffdisulfid und bei hohen Drücken auch Kohlenstoffdioxid, halogenierte aliphatische oder aromatische Kohlenwasserstoffe, Ketone oder Aldehyde, Lactone ($\gamma$-Butyrolacton), Lactame (z. B. N-Methyl-2-pyrrolidon bzw. N-Ethyl-2-pyrrolidon), Nitrile wie z. B. Acetonitril, Nitroverbindungen, tertiäre Carbonsäureamide (*N,N*-Dimethylformamid), Harnstoffderivate wie Tetramethylharnstoff oder Dimethylpropylenharnstoff (DMPU), Sulfoxide wie Dimethylsulfoxid (DMSO), Sulfone wie Sulfolan, Kohlensäureester wie Dimethylcarbonat oder Ethylencarbonat. Auch seien protische Lösungsmittel genannt wie Wasser, Methanol, Ethanol, n- und Isopropanol, und andere Alkohole, primäre, sekundäre und tertiäre Amine, Carbonsäuren, primäre und sekundäre Amide wie Formamid, genannt.

Weitere Hilfsstoffe, die in der erfindungsgemäßen Beschichtungsmasse enthalten sein können, sind Füllstoffe.

Für die Farbgebung bei Beschichtungssystemen bei der Hochtemperaturanwendung eignen sich insbesondere anorganische Pigmente wie Metalloxide oder Spinellpigmente. Als Füllstoffe kann insbesondere Glimmer verwendet werden, da dieser eine sehr hohe Temperaturbeständigkeit aufweist und außerdem die thermisch bedingte Volumenänderung des Substrats kompensieren kann.

Darüber hinaus können auch Metallpigmente wie Aluminiumbronzen oder Zinkstaub verwendet werden.

Für die Verbesserung des Korrosionsschutzes können die typischen Korrosionsschutzpigmente wie z. B. Zinkphoshate zum Einsatz kommen.

Insbesondere bevorzugt weisen die erfindungsgemäßen Beschichtungsmassen einen Anteil an Komponente A) von 10 bis 70 Gew.-%, vorzugsweise 20 bis 50 Gew.-%, von Komponente B) von 0,001 bis 15 Gew.-%, vorzugsweise 1 bis 3 Gew.-% und von Komponente C) von 10 bis 80 Gew.-%, vorzugsweise von 20 bis 50 Gew.-% auf, wobei die Summen der genannten Anteile 100 Gew.-% ergeben.

Die mit den erfindungsgemäßen Beschichtungsmassen erzielten Härtungsgeschwindigkeiten übertreffen vielfach die aus dem Stand der Technik bekannten Härtungsgeschwindigkeiten.

Weiterer Gegenstand der vorliegenden Erfindung sind Beschichtungssysteme, enthaltend Beschichtungsmassen gemäß der vorliegenden Erfindung. Bei den erfindungsgemäßen Beschichtungssystemen kann es sich um alle dem Fachmann bekannten Arten von Beschichtungssystemen handeln, insbesondere um Farben und Lacke.

Hierzu werden erfindungsgemäß in der Regel die erfindungsgemäßen Komponenten, gegebenenfalls mit den optionalen Hilfs- und Zusatzstoffen zusammengegeben und gemäß den üblichen Herstellmethoden von flüssigen Lacken verarbeitet. Hierbei werden die Polysiloxane A) bei ausreichender Alkoxyfunktionalität entweder allein als Komponente A, oder in Kombination mit Alkoxysilanen C) mit den optionalen Zusatzstoffen D) zusammengegeben. Unter D) versteht man hierbei meist farbgebende Pigmente, Füllstoffe, Thixotropierungsmittel und Lösemittel, die nacheinander unter Rühren zur Herstellung des Beschichtungssystems, also insbesondere der Farbe oder des Lacks, hinzugegeben werden und nach der Vordispergierung unter dem Dissolver mittels einer Rührwerkskugelmühle feindispergiert werden. Mit dem Mahlen auf einer Perlmühle werden die Pigmentagglomerate zerteilt, um so eine möglichst feine Verteilung der Pigmente und hohe Farbstärke zu erzielen. Die Zugabe des Vernetzungskatalysators B) kann bei einem 1K-System entweder beim Auflacken, also am Ende der Lackherstellung kurz vor dem Abfüllen in die Transportgebinde erfolgen, oder der Katalysator wird erst direkt vor der Applikation des Beschichtungssystems als zweite Komponente hinzugefügt. Ob eine Beschichtungsmasse bevorzugt als 1K oder 2K-System eingesetzt wird, hängt in der Regel von der Kombination der einzelnen Rohstoffe in der Rezeptur ab und kann bei jeder Rezeptur durch Lagerstabilitätsversuche in fachmännischer Weise geprüft werden.

Die Applikation des erfindungsgemäßen Beschichtungssystems findet im Allgemeinen durch Spritzapplikation statt, kann aber auch durch andere Applikationstechniken wie z. B. Streichen, Rollen, Fluten, Tauchen, Wischen, Gießen aufgetragen werden. Als Substrate eignen sich metallische Untergründe wie z. B. Stahl, Stahlguss, Edelstahl, feuerverzinkter Stahl, Aluminium, Aluminiumguss oder Kupfer. Für eine bessere Haftung kann das Substrat durch Sandstrahlen oder Anschleifen angeraut werden. Auch nichtmetallische Substrate wie Glas oder Keramiken können zum Einsatz kommen.

Das auf das Substrat aufgebrachte erfindungsgemäße Beschichtungssystem härtet dann unter Zutritt von Luftfeuchtigkeit durch eine katalysierte Hydrolyse-Kondensation-Vernetzung aus. Eine kombinierte forcierte Trocknung bei erhöhter Temperatur und gleichzeitig stattfindender chemischer Vernetzung durch Hydrolyse-Kondensation unter Einbringen von genügend Feuchtigkeit in den Ofen schließen sich dabei nicht gegenseitig aus. Ein weiterer Vorteil solcher mit einem Katalysator versetzten Beschichtungssysteme ist, dass diese bei geschlossenen Gebinden keiner Topfzeitproblematik unterliegen, da die Aushärtung erst bei Anwesenheit von Wasser aus der umgebenden Luftfeuchtigkeit stattfindet. Im Gegensatz zu den konventionellen, rein physikalisch trocknenden silikonharzbasierten Beschichtungssystemen, die zum Erreichen der vollen mechanischen und chemischen Beständigkeit erst mindestens für 30 min bei 250 °C Objekttemperatur eingebrannt werden müssen, kann die Energie für die Ofentrocknung hier vollständig eingespart werden. Die aus den erfindungsgemäßen Beschichtungsmassen hergestellten Beschichtungssysteme härten bereits bei Raumtemperatur durch chemische Vernetzung aus.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Werden im Rahmen der vorliegenden Erfindung %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben, um Zahlenmittel. Werden nachfolgend Messwerte angegeben, so wurden diese Messwerte, wenn nicht anders angegeben, bei einem Druck von 101325 Pa, einer Temperatur von 23 °C und der umgebenden relativen Luftfeuchtigkeit von ca. 40 % ermittelt

Nachfolgend wird die vorliegende Erfindung anhand von Beispielen näher erläutert. Alternative Ausführungsformen der vorliegenden Erfindung sind in analoger Weise erhältlich.

**Beispiele:**

Allgemeine Methoden und Materialien

| 1,1,3,3-Tetramethylguanidin (TMG), 99 % | Kat. Nr. 241768 | Sigma-Aldrich Chemie GmbH München |
|---|---|---|
| 1,8-Diazabicyclo[5.4.0.]-7-undecen (DBU), 98 % | Kat. Nr. 139009 | Sigma-Aldrich Chemie GmbH München |

(fortgesetzt)

| Butyltitanat (TnBT) | TYZOR® TBT | Dorf Ketal B.V., Netherlands |
|---|---|---|
| Dynasylan 9165, Phenyltrimethoxysilan, PTMS, > 98% | | Evonik Industries AG |
| Dynasylan MTMS, Methyltriethoxysilan, >98% | | Evonik Industries AG |
| Dynasylan 9265 Phenyltriethoxysilan, PTEOS, >97% | | Evonik Industries AG |
| Dynasylan A, Tetraethoxysilan (TEOS) | | Evonik Industries AG |
| Dynasylan PTEO, Propyltriethoxysilan | | Evonik Industries AG |
| Phenyltrichlorsilan, PTS | | Wacker Dow Corning |
| Methyltrichlorsilan, MTS | | Wacker Dow Corning |
| Decamethylcyclopentasiloxan (D5) Dow Corning 245 Fluid | | Dow Corning |
| SILRES® MSE 100 | Me-Si-Harz, 29 Gew.-% Methoxygruppen $M_w$ = 2.566 g/mol $M_n$ = 809 g/mol $M_W/M_N$ = 3,17 | Wacker |
| Harz 1 | Me-Si-Harz, 35 Gew.-% Methoxygruppen $M_w$ = 746 g/mol $M_n$ = 531 g/mol $M_W/M_N$ = 1,4 | Evonik Industries AG |
| Harz 2 | Me/Ph-Si-Harz, 15 Gew.-% Methoxygruppen $M_w$ = 1.656 g/mol $M_n$ = 966 g/mol $M_W/M_N$ = 1,7 | Evonik Industries AG |
| Harz 3 | Me/Ph-Si-Harz, 25 Gew.-% Methoxygruppen $M_w$ = 3.050 g/mol $M_n$ = 1.050 g/mol $M_W/M_N$ = 2,7 | Evonik Industries AG |
| Harz 4 | Me/Ph-Si-Harz, 17 Gew.-% Methoxygruppen $M_w$ = 1.220 g/mol $M_n$ = 780 g/mol $M_W/M_N$ = 1,6 | Evonik Industries AG |
| Harz 5 | Me/Ph-Si-Harz, 6 Gew.-% Methoxygruppen, 85%ig in Xylol $M_w$ =4.440 g/mol $M_n$ =1.769 g/mol $M_W/M_N$ = 2,5 | Evonik Industries AG |

(fortgesetzt)

| Harz 6 | Me/Ph-Si-Harz, 2 Gew.-% Methoxygruppe, 80%ig in Xylol<br>$M_w$ =40.000-90.000 g/mol<br>$M_n$ = 3.260-3.763 g/mol<br>$M_W/M_N$ = 12-24 | Evonik Industries AG |
|---|---|---|
| Harz 7 | Me/Ph-Si-Harz, 14 Gew.-% Ethoxygruppen, 91%ig in Methoxypropylacetat<br>$M_w$ = 1.790 g/mol<br>$M_n$ = 1.160 g/mol<br>$M_W/M_N$ = 1,5 | Evonik Industries AG |
| Harz 8 | Ph-Si-Harz, 25 Gew.-% Ethoxygruppen,<br>$M_w$ =940 g/mol<br>$M_n$ = 740 g/mol<br>$M_W/M_N$ = 1,3 | Evonik Industries AG |
| Harz 9 | Ph-Si-Harz, 17 Gew.-% Methoxygruppen,<br>$M_w$ = 1.400 g/mol<br>$M_n$ = 860 g/mol<br>$M_W/M_N$ = 1,6 | Evonik Industries AG |

**Trockenzeitmessungen:**

Zur Beurteilung der katalytischen Aktivität von Katalysatoren in einem Bindemittel eignet sich die Bestimmung der Trockenzeit mit einem Trockenzeitmessgerät (Drying Recorder). Ein solches Prüfverfahren beschreibt die ASTM D5895. Analog dieser Prüfmethode wurden Trockenzeitmessungen mittels eines Drying Recorders Typ BK3 (The Mickle Laboratory Engineering Co. Ltd., Goose Green, Gomshall, Guildford, Surrey GU5 9LJ., U.K.) durchgeführt. Dabei wurden auf Standardglasstreifen (30 x 2,5 cm x 2 mm) mittels einer Kastenrakel (Erichsen Model 360) dünne Bindemittelfilme aufgetragen. Die Standardglasstreifen wurden zuvor mit Aceton und nachfolgend einer Ethanol / VE-Wasser-Mischung von Staub-, Schmutz- und Fettanhaftungen befreit. Es wurde sodann der Schieber mittels eines Hebels auf der Rückseite, nach links in Startposition verschoben. Dann wurden die Ritznägel auf die Probenglasplatten runtergeklappt. Die Prüfdauer wurde auf 6, 12 bzw. 24 Stunden eingestellt und die Messung gestartet. Nach Ablauf der Prüfdauer wurden die Ritznägel hochgeklappt und die Glasplatten zur Beurteilung herausgenommen. Die An- und Durchtrocknungszeitpunkte wurden anhand der angebrachten Zeitskala abgelesen.

**GPC-Messungen:**

GPC-Messungen zur Bestimmung des Gewichtmittel $M_w$, des Zahlenmittels $M_n$ sowie der Polydispersität $M_w/M_n$ wurden unter den folgenden Messbedingungen durchgeführt: Säulenkombination SDV 1.000/10.000 Å (Länge 65 cm), Temperatur 30 °C, THF als mobile Phase, Fließrate 1 ml/min, Probenkonzentration 10 g/l, RI-Detektor, Auswertung der alkoxyfunktionellen Polysiloxane erfolgte gegen Polystyrol-Standard (162 - 2.570.000 g/mol).

**a) Synthese der Harze 1 bis 9:**

Harz 1:
In Anlehnung an EP 0157318 wurde ein methoxyfunktionelles Methyl-Silikonharz durch Hydrolyse und nachfolgende Kondensation von 559,7 g (3,74 mol) Trichlormethylsilan mittels eines Methanol/Wasser Gemisches [373,1 g (11,64 mol) MeOH / 67,2 g $H_2O$ (3,71 mol)] hergestellt. Nach beendeter Zugabe des Methanol/ Wasser gemisches wurde das Reaktiongemisch bei 16 mbar destilliert. Die Analyse mittels $^1$H-NMR ergab eine Methoxyfunktionalität von 35 Gew.-%; die Molmassen wurden zu $M_w$ = 746 g/mol, $M_n$ = 531 g/mol, $M_w/M_n$ = 1,4 bestimmt.

Harz 2:

In Anlehnung an EP 1142929 wurde ein methoxyfunktionelles Methyl-Phenyl-Silikonharz hergestellt. Dazu wurde zunächst 562,5 g (2,66 mol) Phenyltrichlorsilan (PTS) langsam mit 167,4 g (5,21 mol) Methanol versetzt. Nun wurde 122,5 g (0,27 mol) Decamethylcyclopentasiloxan (D5) zugesetzt und bei 50°C 48,0 g (2,60 mol) Wasser hinzugetropft. Anschließend wurde bei 60°C eine Vakuumdestillation bei einem Druck < 100 mbar durchgeführt. Nach Inertisierung mit Stickstoff und Zugabe von weiteren 100,0 g (3,12 mol) Methanol wurde noch 30 min nachgerührt und dann erneut eine Vakuumdestillation durchgeführt. Die Analyse mittels $^1$H-NMR ergab eine Methoxyfunktionalität von 15 Gew.-% die Molmassen wurden zu $M_w$ =1.656 g/mol, $M_n$ =966 g/mol, $M_w/M_n$ = 1,7 bestimmt.

Harz 3:

In Anlehnung an EP 1142929 wurde ein methoxyfunktionelles Methyl-Phenyl-Silikonharz hergestellt. Dazu wurden 419,4 g (2,81 mol) Methyltrichlorsilan langsam unter Rühren mit 129,4 g (4,03 mol) Methanol versetzt. Anschließend wurden 228,2 g (1,08 mol) Phenyltrichlorsilan (PTS) zugetropft, wobei sich das Reaktionsgemisch auf 35°C erwärmte. Im Anschluss an die PTS-Zugabe wurde noch 249,9 g eines Methanol/Wasser-Gemisches [186,4 g (5,82 mol) MeOH und 63,5 g (3,52 mol) $H_2O$] hinzugegeben, schließlich 2 h gerührt und nach beendeter Zugabe eine Vakuumdestillation bei 16 mbar durchgeführt. Die Analyse mittels $^1$H-NMR ergab eine Methoxyfunktionalität von 25 Gew.-% die Molmassen wurden zu $M_w$ =3.050 g/mol, $M_n$ =1.050 g/mol, $M_w/M_n$ = 2,7 bestimmt.

Harz 4:

In Anlehnung an EP 1142929 wurde ein methoxyfunktionelles Methyl-Phenyl-Silikonharz hergestellt. Dazu wurde zunächst 576,5 g (2,73 mol) Phenyltrichlorsilan (PTS) langsam mit 172,4 g (5,38 mol) Methanol versetzt. Nun wurde 101,1 g (0,27 mol) Decamethylcyclopentasiloxan (D5) zugesetzt und bei 50°C 49,2 g (2,73 mol) Wasser hinzugetropft. Anschließend wurde bei 60 °C eine Vakuumdestillation bei einem Druck < 100 mbar durchgeführt. Nach Inertisierung mit Stickstoff und Zugabe von weiteren 100,8 g (3,1 mol) Methanol wurde noch 30 min nachgerührt und dann erneut eine Vakuumdestillation durchgeführt. Die Analyse mittels $^1$H-NMR ergab eine Methoxyfunktionalität von 17 Gew.-% die Molmassen wurden zu $M_w$ =1.220 g/mol, $M_n$ =780 g/mol, $M_w/M_n$ = 1,6 bestimmt.

Harz 5:

In Anlehnung an EP 1142929 wurde ein methoxyfunktionelles Methyl-Phenyl-Silikonharz hergestllt. Dazu wurden 606,3 g (2,86 mol) Phenyltrichlorsilan vorgelegt und dazu eine Methanol/Wasser Mischung [59,4 g (1,80 mol) Methanol und 18,07 g (1,00 mol) Wasser] hinzugetropft. Anschließend werden 70,59 g (0,19 mol) Decamethylcyclopentasiloxan (D5) und 24,3 g (0,15 mol) Hexametyldisiloxan zur Rektionsmischung gegeben und bei einer Temperatur < 50 °C wieder eine Methanol/Wasser Mischung [69,9 g (2,12 mol) Methanol und 50,8 g (2,82 mol) Wasser] hinzugetropft. Nach der ersten Vakuumdestillation bei ca. 50°C und einem Druck < 100 mbar wird die Reaktionsmischung noch eine Stunde im Vakuum gehalten. Nach erneuter Zugabe von 16,9 g Methanol (0,51 mol) wurde bei 120°C und einem Druck < 100 mbar erneut destilliert. Die Analyse mittels $^1$H-NMR ergab eine Methoxyfunktionalität von 6 Gew.-% die Molmassen wurden zu $M_w$ =4.440 g/mol, $M_n$ =1.769 g/mol, $M_w/M_n$ = 2,5 bestimmt. Mit 83,6 g Xylol wurde der Gehalt des Harzes auf 85 Gew.-% eingestellt.

Harz 6:

In Anlehnung an EP 0 157 318 B1 wurde ein methoxyfunktionelles Methyl-Phenyl-Silikonharz hergestellt. 858,5 g Harz 5 wurden mit 9,4 g (0,15 mol) Ethylenglykol, 14,3 g Xylol und 41,0 g (0,31 mol) Trimethylolpropan vorgelegt, mit 0,1 g Butyltitanat versetzt und das Gemisch bis zum Rückfluss aufgeheizt. Anschließend wurde bis zum Viskositätsanstieg so lange destilliert, bis eine klares Harz erhalten wurde. Nach Abkühlen auf 120 °C wurden dann zunächst die Hälfte von 40,76 g Isobutanol hinzugegeben und nach weiterem Abkühlen auf 105 °C die restliche Isobutanolmenge. Abschließend wurde noch eine Stunde bei 60°C gerührt. Mittels Xylol wird der Gehalt des Bindemittel auf 80 Gew.-% eingestellt. Die Analyse mittels $^1$H-NMR ergab eine Methoxyfunktionalität von 2 Gew.-% die Molmassen wurden zu $M_w$ =40.000 bis 90.000 g/mol, $M_n$ =3.260 bis 3.763 g/mol, $M_w/M_n$ = 12 bis 24 bestimmt.

Harz 7:

In Anlehnung an EP 1142929 wurde ein ethoxyfunktionelles Methyl-Phenyl-Silikonharz hergestellt. Dazu wurde zunächst 571,0 g (2,70 mol) Phenyltrichlorsilan langsam mit 247,7 g (5,38 mol) Ethanol versetzt. Nun wurde 79,9 g (0,22 mol) Decamethylcyclopentasiloxan (D5) zugesetzt und bei 50 °C 60,5 g (3,36 mol) Wasser hinzugetropft. Anschließend wurde bei 60 °C eine Vakuumdestillation bei einem Druck < 100 mbar durchgeführt. Nach Inertisierung mit Stickstoff und Zugabe von weiteren 40,8 g (0,88 mol) Ethanol wurde noch 30 min nachgerührt und dann erneut eine Vakuumdestillation durchgeführt. Die Analyse mittels $^1$H-NMR ergab eine Ethoxyfunktionalität von 14 Gew.-% die Molmassen wurden zu $M_w$ =1.790 g/mol, $M_n$ =1.160 g/mol, $M_w/M_n$ = 1,5 bestimmt. Mit 38,6 ml Methoxpropylacetat wurde der Gehalt des Silikonharzes auf 91 % eingestellt.

Harz 8:

In Anlehnung an EP 1142929 wurde ein ethoxyfunktionelles Phenyl-Silikonharz durch die Hydrolyse und nachfolgende Kondensation von 646,1 g (3,05 mol) Phenyltrichlorsilan mittels eines Ethanol/Wasser Gemisches [296,3 g (6,43 mol) EtOH / 57,5 g $H_2O$ (3,19 mol)] hergestellt. Nach beendeter Zugabe des Ethanol/Wasser -Gemisches wurde das Reaktiongemisch bei 16 mbar destilliert. Die Analyse mittels $^1$H-NMR ergab eine Ethoxyfunktionalität von 25 Gew.-% und die Molmassen wurden zu $M_w$ =940 g/mol, $M_n$ =740 g/mol, $M_w/M_n$ = 1,3 bestimmt.

Harz 9:

In Anlehnung an EP 1142929 wurde ein methoxyfunktionelles Phenyl-Silikonharz durch die Hydrolyse und nachfolgende Kondensation von 745,6 g (3,53 mol) Phenyltrichlorsilan mittels eines Methanol/Wasser Gemisches [184,3 g (5,76 mol) MeOH / 70,1 g $H_2O$ (3,89 mol)] hergestellt. Nach beendeter Zugabe des Methanol/ Wasser-Gemisches wurde das Reaktiongemisch bei 16 mbar destilliert. Die Analyse mittels $^1$H-NMR ergab eine Methoxyfunktionalität von 17 Gew.-% und die Molmassen wurden zu $M_w$=1.400 g/mol, $M_n$ = 860 g/mol, $M_w/M_n$ = 1,6 bestimmt.

## b) Herstellung von Beschichtungsmassen

Aus Harzen gemäß a), Vernetzungskatalysatoren und gegebenenfalls Alkoxysilanen werden Beschichtungsmassen durch Mischen der Bestandteile hergestellt. Die Zusammensetzungen sind in Tabelle 1 zusammengefasst.

Tabelle 1: Erfindungsgemäße Zusammensetzungen (die Prozentangaben sind Gew.-% bezogen auf die Gesamtmischung).

| Zusammen-setzung | Katalysator [%] | | Harz [%] | Alkoxysilan 1[%] | Alkoxysilan 2[%] |
|---|---|---|---|---|---|
| | **TnBT** | | **MSE 100** | | |
| Z1.1* | 1,5 | | 98,5 | | |
| | TnBT | | HARZ 1 | | |
| Z1.2* | 1,5 | | 98,5 | | |
| | TMG | | HARZ 2 | | |
| Z2.1 | 1,0 | | 99,0 | | |
| | DBU | | HARZ 2 | | |
| Z2.2 | 1,0 | | 99,0 | | |
| | TnBT | TMG | HARZ 2 | | |
| Z2.3 | 1,0 | 2,0 | 97,0 | | |
| | TnBT | DBU | HARZ 2 | | |
| Z2.4 | 1,0 | 1,0 | 98,0 | | |
| | TMG | | **HARZ 2** | **PTMS** | |
| Z2.5 | 2,0 | | 68,6 | 29,4 | |
| | **DBU** | | **HARZ 2** | **PTMS** | |
| Z2.6 | 1,5 | | 68,95 | 29,55 | |
| | **TnBT** | **TMG** | **HARZ 2** | **PTMS** | |
| Z2.7 | 1,0 | 2,0 | 67,9 | 29,1 | |
| | **TnBT** | **DBU** | **HARZ** 2 | **PTMS** | |
| Z2.8 | 1,0 | 1,0 | 68,6 | 29,4 | |
| | **TMG** | | **HARZ 2** | | **MTMS** |
| Z2.9 | 2,0 | | 68,6 | | 29,4 |
| | **DBU** | | **HARZ 2** | | **MTMS** |
| Z2.10 | 1,5 | | 68,95 | | 29,55 |

EP 3 036 296 B1

(fortgesetzt)

| Zusammen-setzung | Katalysator [%] | | Harz [%] | Alkoxysilan 1[%] | Alkoxysilan 2[%] |
|---|---|---|---|---|---|
| | **TnBT** | **TMG** | **HARZ 2** | | **MTMS** |
| Z2.11 | 1,0 | 2,0 | 67,9 | | 29,1 |
| | **TnBT** | **DBU** | **HARZ 2** | | **MTMS** |
| Z2.12 | 1,0 | 1,0 | 68,6 | | 29,4 |
| | | | | | |
| | **TMG** | | **HARZ 3** | | |
| Z3.1 | 1,0 | | 99,0 | | |
| | **DBU** | | **HARZ 3** | | |
| Z3.2 | 1,5 | | 98,5 | | |
| | **TnBT** | **TMG** | **HARZ 3** | | |
| Z3.3 | 1,0 | 2,0 | 97,0 | | |
| | **TnBT** | **DBU** | **HARZ 3** | | |
| Z3.4 | 1,0 | 1,0 | 98,0 | | |
| | **TMG** | | **HARZ 3** | **PTMS** | |
| Z3.5 | 2,0 | | 68,6 | 29,4 | |
| | **DBU** | | **HARZ 3** | **PTMS** | |
| Z3.6 | 1,5 | | 68,95 | 29,55 | |
| | **TnBT** | **TMG** | **HARZ 3** | **PTMS** | |
| Z3.7 | 1,0 | 2,0 | 67,9 | 29,1 | |
| | **TnBT** | **DBU** | **HARZ 3** | **PTMS** | |
| Z3.8 | 1,0 | 1,0 | 68,6 | 29,4 | |
| | **TMG** | | **HARZ 3** | | **MTMS** |
| Z3.9 | 2,0 | | 68,6 | | 29,4 |
| | **DBU** | | **HARZ 3** | | **MTMS** |
| Z3.10 | 1,5 | | 68,95 | | 29,55 |
| | **TnBT** | **TMG** | **HARZ 3** | | **MTMS** |
| Z3.11 | 1,0 | 2,0 | 67,9 | | 29,1 |
| | **TnBT** | **DBU** | **HARZ 3** | | **MTMS** |
| Z3.12 | 1,0 | 1,0 | 68,6 | | 29,4 |
| | | | | | |
| | **TMG** | | **HARZ 4** | | |
| Z4.1 | 2,0 | | 98,0 | | |
| | **DBU** | | **HARZ 4** | | |
| Z4.2 | 1,5 | | 98,5 | | |
| | **TnBT** | **TMG** | **HARZ 4** | | |
| Z4.3 | 1,0 | 2,0 | 97,0 | | |
| | **TnBT** | **DBU** | **HARZ 4** | | |
| Z4.4 | 1,0 | 1,0 | 98,0 | | |

(fortgesetzt)

| Zusammen-setzung | Katalysator [%] | | Harz [%] | Alkoxysilan 1[%] | Alkoxysilan 2[%] |
|---|---|---|---|---|---|
| | **TMG** | | **HARZ 4** | **PTMS** | |
| Z4.5 | 2,0 | | 68,6 | 29,4 | |
| | **DBU** | | **HARZ 4** | **PTMS** | |
| Z4.6 | 1,5 | | 68,95 | 29,55 | |
| | **TnBT** | **TMG** | **HARZ 4** | **PTMS** | |
| Z4.7 | 1,0 | 2,0 | 67,9 | 29,1 | |
| | **TnBT** | **DBU** | **HARZ 4** | **PTMS** | |
| Z4.8 | 1,0 | 1,0 | 68,6 | 29,4 | |
| | **TMG** | | **HARZ 4** | **PTMS** | |
| Z4.9 | 2,0 | | 49,0 | 49,0 | |
| | **DBU** | | **HARZ 4** | **PTMS** | |
| Z4.10 | 1,5 | | 49,25 | 49,25 | |
| | **TnBT** | **TMG** | **HARZ 4** | **PTMS** | |
| Z4.11 | 1,0 | 2,0 | 48,5 | 48,5 | |
| | **TnBT** | **DBU** | **HARZ 4** | **PTMS** | |
| Z4.12 | 1,0 | 1,0 | 49,0 | 49,0 | |
| | **TMG** | | **HARZ 4** | | **MTMS** |
| Z4.13 | 2,0 | | 68,6 | | 29,4 |
| | **DBU** | | **HARZ 4** | | **MTMS** |
| Z4.14 | 1,5 | | 68,95 | | 29,55 |
| | **TnBT** | **TMG** | **HARZ 4** | | **MTMS** |
| Z4.15 | 1,0 | 2,0 | 67,9 | | 29,1 |
| | **TnBT** | **DBU** | **HARZ 4** | | **MTMS** |
| Z4.16 | 1,0 | 1,0 | 68,6 | | 29,4 |
| | | | | | |
| | **TMG** | | **HARZ 5** | **PTMS** | |
| Z5.1 | 1,0 | | 49,5 | 49,5 | |
| | **DBU** | | **HARZ 5** | **PTMS** | |
| Z5.2 | 1,0 | | 49,5 | 49,5 | |
| | **TnBT** | **TMG** | **HARZ 5** | **PTMS** | |
| Z5.3 | 1,0 | 2,0 | 48,5 | 48,5 | |
| | **TnBT** | **DBU** | **HARZ 5** | **PTMS** | |
| Z5.4 | 1,0 | 1,0 | 49,0 | 49,0 | |
| | **TMG** | | **HARZ 5** | | **MTMS** |
| Z5.5 | 2,0 | | 49,0 | | 49,0 |
| | **DBU** | | **HARZ 5** | | **MTMS** |
| Z5.6 | 1,5 | | 49,25 | | 49,25 |
| | **TnBT** | **TMG** | **HARZ 5** | | **MTMS** |

(fortgesetzt)

| Zusammen-setzung | Katalysator [%] | | Harz [%] | Alkoxysilan 1[%] | Alkoxysilan 2[%] |
|---|---|---|---|---|---|
| Z5.7 | 1,0 | 2,0 | 48,5 | | 48,5 |
| | **TnBT** | **DBU** | **HARZ 5** | | **MTMS** |
| Z5.8 | 1,0 | 1,0 | 49,0 | | 49,0 |
| | | | | | |
| | **TMG** | | **HARZ 6** | **PTMS** | |
| Z6.1 | 1,0 | | 49,5 | 49,5 | |
| | **DBU** | | **HARZ 6** | **PTMS** | |
| Z6.2 | 1,0 | | 49,5 | 49,5 | |
| | **TnBT** | **TMG** | **HARZ 6** | **PTMS** | |
| Z6.3 | 1,0 | 2,0 | 48,5 | 48,5 | |
| | **TnBT** | **DBU** | **HARZ 6** | **PTMS** | |
| Z6.4 | 1,0 | 1,0 | 49,0 | 49,0 | |
| | **TMG** | | **HARZ 6** | | **MTMS** |
| Z6.5 | 2,0 | | 49,0 | | 49,0 |
| | **DBU** | | **HARZ 6** | | **MTMS** |
| Z6.6 | 1,5 | | 49,25 | | 49,25 |
| | **TnBT** | **TMG** | **HARZ 6** | | **MTMS** |
| Z6.7 | 1,0 | 2,0 | 48,5 | | 48,5 |
| | **TnBT** | **DBU** | **HARZ 6** | | **MTMS** |
| Z6.8 | 1,0 | 1,0 | 49,0 | | 49,0 |
| | **TMG** | | **HARZ 6** | **PTMS** | **MTMS** |
| Z6.9 | 2,0 | | 49,0 | 24,5 | 24,5 |
| | **DBU** | | **HARZ 6** | **PTMS** | **MTMS** |
| Z6.10 | 1,5 | | 49,25 | 24,63 | 24,62 |
| | **TnBT** | **TMG** | **HARZ 6** | **PTMS** | **MTMS** |
| Z6.11 | 1,0 | 2,0 | 48,5 | 24,25 | 24,25 |
| | **TnBT** | **DBU** | **HARZ 6** | **PTMS** | **MTMS** |
| Z6.12 | 1,0 | 1,0 | 49,0 | 24,5 | 24,5 |
| | | | | | |
| | **TMG** | | **HARZ 7** | **PTEOS** | **TEOS** |
| Z7.1 | 2,0 | | 49,0 | 24,5 | 24,5 |
| | **DBU** | | **HARZ 7** | **PTEOS** | **TEOS** |
| Z7.2 | 2,0 | | 49,0 | 24,5 | 24,5 |
| | **TnBT** | **TMG** | **HARZ 7** | **PTEOS** | **TEOS** |
| Z7.3 | 1,0 | 2,0 | 48,5 | 24,25 | 24,25 |
| | **TnBT** | **DBU** | **HARZ 7** | **PTEOS** | **TEOS** |
| Z7.4 | 1,0 | 1,0 | 49,0 | 24,5 | 24,5 |

(fortgesetzt)

| Zusammen-setzung | Katalysator [%] | | Harz [%] | Alkoxysilan 1[%] | Alkoxysilan 2[%] |
|---|---|---|---|---|---|
| | **TMG** | | **HARZ 7** | **Propyltri-ethoxysilan** | **TEOS** |
| Z7.5 | 2,0 | | 49,0 | 24,5 | 24,5 |
| | **DBU** | | **HARZ 7** | **Propyltri-ethoxysilan** | **TEOS** |
| Z7.6 | 1,5 | | 49,25 | 24,63 | 24,62 |
| | **TnBT** | **TMG** | **HARZ 7** | **Propyltri-ethoxysilan** | **TEOS** |
| Z7.7 | 1,0 | 2,0 | 48,5 | 24,25 | 24,25 |
| | **TnBT** | **DBU** | **HARZ 7** | **Propyltri-ethoxysilan** | **TEOS** |
| Z7.8 | 1,0 | 1,0 | 49,0 | 24,5 | 24,5 |
| | | | | | |
| | **TMG** | | **HARZ 8** | **TEOS** | |
| Z8.1 | 2,0 | | 68,6 | 29,4 | |
| | DBU | | **HARZ 8** | **TEOS** | |
| Z8.2 | 1,5 | | 68,95 | 29,55 | |
| | **TnBT** | **TMG** | **HARZ 8** | **TEOS** | |
| Z8.3 | 1,0 | 2,0 | 67,9 | 29,1 | |
| | **TnBT** | **DBU** | **HARZ 8** | **TEOS** | |
| Z8.4 | 1,0 | 1,0 | 68,6 | 29,4 | |
| | **TMG** | | **HARZ 8** | **TEOS** | |
| Z8.5 | 2,0 | | 49,0 | 49,0 | |
| | **DBU** | | **HARZ 8** | **TEOS** | |
| Z8.6 | 1,5 | | 49,25 | 49,25 | |
| | **TnBT** | **TMG** | **HARZ 8** | **TEOS** | |
| Z8.7 | 1,0 | 2,0 | 48,5 | 48,5 | |
| | **TnBT** | **DBU** | **HARZ 8** | **TEOS** | |
| Z8.8 | 1,0 | 1,0 | 49,0 | 49,0 | |
| | **TMG** | | **HARZ 8** | | **PTEOS** |
| Z8.9 | 2,0 | | 49,0 | | 49,0 |
| | **DBU** | | **HARZ 8** | | **PTEOS** |
| Z8.10 | 1,5 | | 49,25 | | 49,25 |
| | **TnBT** | **TMG** | **HARZ 8** | | **PTEOS** |
| Z8.11 | 1,0 | 2,0 | 48,5 | | 48,5 |
| | **TnBT** | **DBU** | **HARZ 8** | | **PTEOS** |
| Z8.12 | 1,0 | 1,0 | 49,0 | | 49,0 |
| | **TMG** | | **HARZ 8** | **TEOS** | **PTEOS** |
| Z8.13 | 2,0 | | 49,0 | 24,5 | 24,5 |

(fortgesetzt)

| Zusammen-setzung | Katalysator [%] | | Harz [%] | Alkoxysilan 1[%] | Alkoxysilan 2[%] |
|---|---|---|---|---|---|
| | **DBU** | | **HARZ 8** | **TEOS** | **PTEOS** |
| Z8.14 | 1,5 | | 49,25 | 24,63 | 24,62 |
| | **TnBT** | **TMG** | **HARZ 8** | **TEOS** | **PTEOS** |
| Z8.15 | 1,0 | 2,0 | 48,5 | 24,25 | 24,25 |
| | **TnBT** | **DBU** | **HARZ 8** | **TEOS** | **PTEOS** |
| Z8.16 | 1,0 | 1,0 | 49,0 | 24,5 | 24,5 |
| | | | | | |
| | **TMG** | | **HARZ 9** | **PTMS** | |
| Z9.1 | 2,0 | | 68,6 | 29,4 | |
| | **DBU** | | **HARZ 9** | **PTMS** | |
| Z9.2 | 1,5 | | 68,95 | 29,55 | |
| | **TnBT** | **TMG** | **HARZ 9** | **PTMS** | |
| Z9.3 | 1,0 | 2,0 | 67,9 | 29,1 | |
| | **TnBT** | **DBU** | **HARZ 9** | **PTMS** | |
| Z9.4 | 1,0 | 1,0 | 68,6 | 29,4 | |
| | **TMG** | | **HARZ 9** | | **TEOS** |
| Z9.5 | 2,0 | | 68,6 | | 29,4 |
| | **DBU** | | **HARZ 9** | | **TEOS** |
| Z9.6 | 1,5 | | 68,95 | | 29,55 |
| | **TnBT** | **TMG** | **HARZ 9** | | **TEOS** |
| Z9.7 | 1,0 | 2,0 | 67,9 | | 29,1 |
| | **TnBT** | **DBU** | **HARZ 9** | | **TEOS** |
| Z9.8 | 1,0 | 1,0 | 68,6 | | 29,4 |
| | **TMG** | | **HARZ 9** | | **MTMS** |
| Z9.9 | 2,0 | | 68,6 | | 29,4 |
| | **DBU** | | **HARZ 9** | | **MTMS** |
| Z9.10 | 1,5 | | 68,95 | | 29,55 |
| | **TnBT** | **TMG** | **HARZ 9** | | **MTMS** |
| Z9.11 | 1,0 | 2,0 | 67,9 | | 29,1 |
| | **TnBT** | **DBU** | **HARZ 9** | | **MTMS** |
| Z9.12 | 1,0 | 1,0 | 68,6 | | 29,4 |
| | | | | | |
| | **TMG** | | **HARZ 2** | **HARZ 6** | |
| Z10.1 | 2,0 | | 49,0 | 49,0 | |
| | **DBU** | | **HARZ 2** | **HARZ 6** | |
| Z10.2 | 1,5 | | 49,25 | 49,25 | |
| | **TnBT** | **TMG** | **HARZ 2** | **HARZ 6** | |
| Z10.3 | 1,0 | 2,0 | 48,5 | 48,5 | |

(fortgesetzt)

| Zusammen-setzung | Katalysator [%] | | Harz [%] | Alkoxysilan 1[%] | Alkoxysilan 2[%] |
|---|---|---|---|---|---|
| | **TnBT** | **DBU** | **HARZ 2** | **HARZ 6** | |
| Z10.4 | 1,0 | 1,0 | 49,5 | 49,5 | |
| * Nicht erfindungsgemäße Beispiele | | | | | |

c) **Anwendungstechnische Untersuchungen**

Einige Zusammensetzungen gemäß Tabelle 1 wurden als Beschichtungsmassen mittels Trocknungsexperimenten am Drying Recorder (Typ BK3) untersucht. Die Ergebnisse sind in Tabelle 2 dargestellt.

Tabelle 2:

| Zusammensetzung | Antrocknung [h] | Durchtrocknung[h] |
|---|---|---|
| Z1.1* | < 0,5 | 0,6 |
| Z1.2* | < 0,5 | 1,2 |
| | | |
| Z2.1 | 2,0 | 3,2 |
| Z2.2 | < 0,5 | 1,5 |
| Z2.3 | < 0,5 | 0,5 |
| Z2.4 | 1,0 | 3,0 |
| Z2.5 | 0,8 | 0,8 |
| Z2.6 | 0,8 | 1,5 |
| Z2.7 | 0,8 | 1,0 |
| Z2.8 | 1,0 | 2,0 |
| Z2.9 | 0,5 | 1,2 |
| Z2.10 | < 0,5 | 1,0 |
| Z2.11 | < 0,5 | 0,5 |
| Z2.12 | < 0,5 | 0,8 |
| | | |
| Z3.1 | < 0,5 | < 0,5 |
| Z3.2 | < 0,5 | < 0,5 |
| Z3.3 | < 0,5 | < 0,5 |
| Z3.4 | < 0,5 | < 0,5 |
| Z3.5 | 0,5 | < 0,8 |
| Z3.6 | < 0,5 | < 0,5 |
| Z3.7 | < 0,5 | < 0,8 |
| Z3.8 | 0,5 | 0,8 |
| Z3.9 | < 0,5 | < 0,5 |
| Z3.10 | < 0,5 | < 0,5 |
| Z3.11 | < 0,5 | < 0,5 |
| Z3.12 | < 0,5 | < 0,5 |
| | | |

(fortgesetzt)

| Zusammensetzung | Antrocknung [h] | Durchtrocknung[h] |
|---|---|---|
| Z4.1 | 0,8 | 1,0 |
| Z4.2 | 0,5 | 1,0 |
| Z4.3 | < 0,5 | 0,5 |
| Z4.4 | 0,8 | 1,2 |
| Z4.5 | 0,5 | 1,5 |
| Z4.6 | 1,0 | 1,2 |
| Z4.7 | < 0,5 | 0,5 |
| Z4.8 | 1,2 | 3,0 |
| Z4.9 | 0,8 | 2,5 |
| Z4.10 | 0,8 | 1,5 |
| Z4.11 | < 0,5 | 0,5 |
| Z4.12 | 0,5 | 0,5 |
| Z4.13 | 0,5 | 1,0 |
| Z4.14 | 0,5 | 0,8 |
| Z4.15 | < 0,5 | 0,5 |
| Z4.16 | 0,5 | 0,5 |
| | | |
| Z5.1 | < 0,5 | 1,5 |
| Z5.2 | < 0,5 | 1,0 |
| Z5.3 | < 0,5 | 0,5 |
| Z5.4 | 0,5 | 1,0 |
| Z5.5 | < 0,5 | < 0,5 |
| Z5.6 | < 0,5 | < 0,5 |
| Z5.7 | < 0,5 | < 0,5 |
| Z5.8 | < 0,5 | < 0,5 |
| | | |
| Z6.1 | < 0,5 | 0,8 |
| Z6.2 | 0,8 | 1,5 |
| Z6.3 | < 0,5 | 0,8 |
| Z6.4 | < 0,5 | 0,5 |
| Z6.5 | < 0,5 | < 0,5 |
| Z6.6 | < 0,5 | < 0,5 |
| Z6.7 | < 0,5 | < 0,5 |
| Z6.8 | < 0,5 | < 0,5 |
| Z6.9 | < 0,5 | < 0,5 |
| Z6.10 | < 0,5 | < 0,5 |
| Z6.11 | < 0,5 | < 0,5 |
| Z6.12 | < 0,5 | < 0,5 |

(fortgesetzt)

| Zusammensetzung | Antrocknung [h] | Durchtrocknung[h] |
|---|---|---|
| | | |
| Z7.1 | 0,5 | 2,5 |
| Z7.2 | < 0,5 | < 0,5 |
| Z7.3 | 1,0 | 2,5 |
| Z7.4 | 1,5 | 4,5 |
| Z7.5 | 0,8 | 1,2 |
| Z7.6 | 0,8 | 1,0 |
| Z7.7 | 1,0 | 2,0 |
| Z7.8 | 1,0 | 4,0 |
| | | |
| Z8.1 | 0,5 | 0,8 |
| Z8.2 | 0,8 | 2,0 |
| Z8.3 | 0,5 | 0,8 |
| Z8.4 | 1,0 | 5,5 |
| Z8.5 | 0,5 | 0,8 |
| Z8.6 | 0,5 | 0,8 |
| Z8.7 | 0,5 | 0,8 |
| Z8.8 | 0,8 | 4,0 |
| Z8.9 | 5,0 | 6,5 |
| Z8.10 | 3,0 | 4,0 |
| Z8.11 | 3,5 | 5,0 |
| Z8.12 | 2,5 | 3,5 |
| Z8.13 | 1,2 | 2,0 |
| Z8.14 | 1,5 | 3,0 |
| Z8.15 | 0,8 | 2,0 |
| Z8.16 | 1,2 | 2,0 |
| | | |
| Z9.1 | < 0,5 | 0,5 |
| Z9.2 | < 0,5 | 0,5 |
| Z9.3 | 0,5 | 2,0 |
| Z9.4 | 0,8 | 1,5 |
| Z9.5 | 0,5 | 0,5 |
| Z9.6 | < 0,5 | < 0,5 |
| Z9.7 | < 0,5 | 1,0 |
| Z9.8 | < 0,5 | < 0,5 |
| Z9.9 | < 0,5 | < 0,5 |
| Z9.10 | < 0,5 | < 0,5 |
| Z9.11 | < 0,5 | < 0,5 |

(fortgesetzt)

| Zusammensetzung | Antrocknung [h] | Durchtrocknung[h] |
|---|---|---|
| Z9.12 | < 0,5 | 0,5 |
| | | |
| Z10.1 | < 0,5 | 1,2 |
| Z10.2 | < 0,5 | < 0,5 |
| Z10.3 | < 0,5 | < 0,5 |
| Z10.4 | < 0,5 | < 0,5 |
| | | |
| * Nicht erfindungsgemäße Beispiele | | |

**Patentansprüche**

1. Beschichtungsmassen enthaltend A) alkoxyfunktionelle Arylpolysiloxane und/oder alkoxyfunktionelle Aryl-Alkylpolysiloxane, B) mindestens einen Vernetzungskatalysator ausgewählt aus der Gruppe der Guanidine oder Amidine und optional C) mindestens ein Alkoxysilan und D) optional weitere Hilfs- und Zusatzstoffe, wobei der Anteil der Alkoxygruppen mindestens 10 Gew.-%, bezogen auf die Summe der Komponenten A) und C) beträgt.

2. Beschichtungsmasse gemäß Anspruch 1, **dadurch gekennzeichnet, dass** die alkoxyfunktionellen Arylpolysiloxane und/oder alkoxyfunktionellen Aryl-Alkylpolysiloxane jene der allgemeinen Formel (I) sind:

$$R_a Si(OR')_b O_{(4-a-b)/2} \qquad (I)$$

worin 0<a<2, 0<b<2 und a+b<4 und
R ausgewählt ist aus einer aromatischen Gruppierung mit 6 bis 20 Kohlenstoffatomen ist oder aus einer Mischung aus einer aromatischen Gruppierung mit 6 bis 20 Kohlenstoffatomen und einer Alkylgruppe bestehend aus 1 bis 8 Kohlenstoffatomen, und
R' eine Alkylgruppe bestehend aus 1 bis 8 Kohlenstoffatomen ist.

3. Beschichtungsmasse gemäß Anspruch 1 oder 2, **dadurch gekennzeichnet, dass** es sich bei Komponente A) um alkoxyfunktionelle Phenylpolysiloxane handelt.

4. Beschichtungsmasse gemäß Anspruch 1 oder 2, **dadurch gekennzeichnet, dass** es sich bei Komponente A) um alkoxyfunktionelle Phenyl-Methylpolysiloxane handelt.

5. Beschichtungsmasse gemäß Anspruch 4, **dadurch gekennzeichnet, dass** das Phenyl : Methyl-Verhältnis im Bereich von 1 : 0,1 bis 0,1 : 1 liegt.

6. Beschichtungsmasse gemäß einem oder mehreren der Ansprüche 1 bis 5, **dadurch gekennzeichnet, dass** die alkoxyfunktionellen Arylpolysiloxane und/oder alkoxyfunktionellen Aryl-Alkylpolysiloxane A) als lösemittelfreies 100 %-Harz oder in Form einer Harzlösung vorliegen.

7. Beschichtungsmasse gemäß einem oder mehreren der Ansprüche 1 bis 6, **dadurch gekennzeichnet, dass** als Alkoxysilane C) solche der Formel (II)

$$R_a Si(OR')_b \qquad (II)$$

$$0 \leq a \leq 2, \ 0 \leq b \leq 4, \quad a+b=4$$

worin R eine Alkylgruppe aus 1 bis 8 Kohlenstoffatomen, eine Cycloalkylgruppe aus 3 bis 8 Kohlenstoffatomen oder eine aromatische Gruppierung mit 6 bis 20 Kohlenstoffatomen ist und R' eine Alkylgruppe mit 1 bis 8 Kohlenstoffatomen ist, eingesetzt werden.

8. Beschichtungsmasse gemäß einem oder mehreren der Ansprüche 1 bis 7, **dadurch gekennzeichnet, dass** der Vernetzungskatalysator B) keine Siliziumatome enthält.

9. Beschichtungsmasse gemäß einem oder mehreren der Ansprüche 1 bis 8, **dadurch gekennzeichnet, dass** der Anteil der Komponente B) in der Beschichtungsmasse 0,1 bis 15,0 Gew.-%, bezogen auf die Komponente A), beträgt.

10. Beschichtungsmasse gemäß einem oder mehreren der Ansprüche 1 bis 9, **dadurch gekennzeichnet, dass** die Beschichtungsmasse weitere Hilfs- und Zusatzstoffe als Komponente D) enthalten.

11. Beschichtungsmasse gemäß einem oder mehreren der Ansprüche 1 bis 10, **dadurch gekennzeichnet, dass** die Beschichtungsmassen einen Anteil an Komponente A) von 10 bis 70 Gew.-%, von Komponente B) von 0,001 bis 15 Gew.-% und von Komponente C) von 10 bis 80 Gew.-%, aufweisen, wobei die Summen der genannten Anteile 100 Gew.-% ergeben.

12. Beschichtungssysteme, enthaltend Beschichtungsmassen gemäß einem oder mehreren der Ansprüche 1 bis 11.

13. Beschichtungssysteme gemäß Anspruch 12, **dadurch gekennzeichnet, dass** das Beschichtungssystem eine Farbe oder ein Lack ist.

**Claims**

1. Coating compositions comprising A) alkoxy-functional arylpolysiloxanes and/or alkoxy-functional aryl-alkylpolysiloxanes, B) at least one crosslinking catalyst selected from the group of the guanidines or amidines and optionally C) at least one alkoxysilane and D) optionally further auxiliaries and additives, where the fraction of the alkoxy groups is at least 10 wt%, based on the sum of components A) and C).

2. Coating composition according to Claim 1, **characterized in that** the alkoxy-functional arylpolysiloxanes and/or alkoxy-functional aryl-alkylpolysiloxanes are those of the general formula (I):

$$R_a Si(OR')_b O_{(4-a-b)/2} \qquad (I)$$

in which $0<a<2$, $0<b<2$ and $a+b<4$ and
R is selected from an aromatic moiety having 6 to 20 carbon atoms or from a mixture of an aromatic moiety having 6 to 20 carbon atoms and an alkyl group consisting of 1 to 8 carbon atoms, and
R' is an alkyl group consisting of 1 to 8 carbon atoms.

3. Coating composition according to Claim 1 or 2, **characterized in that** component A) comprises alkoxy-functional phenylpolysiloxanes.

4. Coating composition according to Claim 1 or 2, **characterized in that** component A) comprises alkoxy-functional phenyl-methylpolysiloxanes.

5. Coating composition according to Claim 4, **characterized in that** the phenyl: methyl ratio is in the range from 1:0.1 to 0.1:1.

6. Coating composition according to one or more of Claims 1 to 5, **characterized in that** the alkoxy-functional arylpolysiloxanes and/or alkoxy-functional aryl-alkylpolysiloxanes A) are present as solvent-free 100% resin or in the form of a resin solution.

7. Coating composition according to one or more of Claims 1 to 6, **characterized in that** alkoxysilanes C) used are those of the formula (II)

$$R_a Si(OR')_b \qquad (II)$$

$$0 \leq a \leq 2, \quad 0 \leq b \leq 4, \quad a+b=4$$

in which R is an alkyl group of 1 to 8 carbon atoms, a cycloalkyl group of 3 to 8 carbon atoms or an aromatic moiety having 6 to 20 carbon atoms and R' is an alkyl group having 1 to 8 carbon atoms.

8. Coating composition according to one or more of Claims 1 to 7, **characterized in that** the crosslinking catalyst B) contains no silicon atoms.

9. Coating composition according to one or more of Claims 1 to 8, **characterized in that** the fraction of component B) in the coating composition is 0.1 to 15.0 wt%, based on component A) .

10. Coating composition according to one or more of Claims 1 to 9, **characterized in that** the coating composition comprises further auxiliaries and additives as component D).

11. Coating composition according to one or more of Claims 1 to 10, **characterized in that** the coating compositions have a fraction of component A) of 10 to 70 wt%, of component B) of 0.001 to 15 wt% and of component C) of 10 to 80 wt%, the sums of the stated fractions making 100 wt%.

12. Coating systems comprising coating compositions according to one or more of Claims 1 to 11.

13. Coating systems according to Claim 12, **characterized in that** the coating system is a paint or a varnish.

**Revendications**

1. Masses de revêtement contenant A) des arylpolysiloxanes à fonctionnalité alcoxy et/ou des aryl-alkylpolysiloxanes à fonctionnalité alcoxy, B) au moins un catalyseur de réticulation choisi dans le groupe des guanidines ou des amidines et éventuellement C) au moins un alcoxysilane et D) éventuellement d'autres adjuvants et additifs, la proportion des groupes alcoxy étant d'au moins 10 % en poids par rapport à la somme des composants A) et C).

2. Masse de revêtement selon la revendication 1, **caractérisée en ce que** les arylpolysiloxanes à fonctionnalité alcoxy et/ou les aryl-alkylpolysiloxanes à fonctionnalité alcoxy sont ceux de formule (I)

$$R_a Si(OR')_b O_{(4-a-b)/2} \qquad (I)$$

dans laquelle 0 < a < 2, 0 < b < 2 et a + b < 4 et
R est choisi parmi un groupement aromatique ayant 6 à 20 atomes de carbone ou un mélange d'un groupement aromatique ayant 6 à 20 atomes de carbone et d'un groupe alkyle constitué de 1 à 8 atomes de carbone, et
R' représente un groupe alkyle constitué de 1 à 8 atomes de carbone.

3. Masse de revêtement selon la revendication 1 ou 2, **caractérisée en ce que**, pour ce qui concerne le composant A), il s'agit de phénylpolysiloxanes à fonctionnalité alcoxy.

4. Masse de revêtement selon la revendication 1 ou 2, **caractérisée en ce que**, pour ce qui concerne le composant A), il s'agit de phényl-méthylpolysiloxanes à fonctionnalité alcoxy.

5. Masse de revêtement selon la revendication 4, **caractérisée en ce que** le rapport phényle: méthyle est dans la plage de 1:0,1 à 0,1:1.

6. Masse de revêtement selon l'une ou plusieurs des revendications 1 à 5, **caractérisée en ce que**, les arylpolysiloxanes à fonctionnalité alcoxy et/ou les aryl-alkylpolysiloxanes à fonctionnalité alcoxy A) se présentent sous forme d'une résine à 100 % sans solvant ou sous forme d'une solution de résine.

7. Masse de revêtement selon l'une ou plusieurs des revendications 1 à 6, **caractérisée en ce qu'**on utilise en tant qu'alcoxysilanes C) ceux de formule (II)

$$R_a Si(OR')_b \qquad (II)$$

$$0 \leq a \leq 2, \quad 0 \leq b \leq 4, \quad a + b = 4$$

dans laquelle R représente un groupe alkyle ayant 1 à 8 atomes de carbone, un groupe cycloalkyle ayant 3 à 8 atomes de carbone ou un groupement aromatique ayant 6 à 20 atomes de carbone et R' représente un groupe alkyle ayant 1 à 8 atomes de carbone.

8. Masse de revêtement selon l'une ou plusieurs des revendications 1 à 7, **caractérisée en ce que** le catalyseur de réticulation B) ne contient aucun atome de silicium.

9. Masse de revêtement selon l'une ou plusieurs des revendications 1 à 8, **caractérisée en ce que** la proportion du composant B) dans la masse de revêtement est de 0,1 à 15,0 % en poids, par rapport au composant A).

10. Masse de revêtement selon l'une ou plusieurs des revendications 1 à 9, **caractérisée en ce que** la masse de revêtement contient en tant que composant D) des adjuvants et additifs supplémentaires.

11. Masse de revêtement selon l'une ou plusieurs des revendications 1 à 10, **caractérisée en ce que** les masses de revêtement présentent une proportion du composant A) de 10 à 70 % en poids, du composant B) de 0,001 à 15 % en poids et du composant C) de 10 à 80 % en poids, la somme des proportions mentionnées étant de 100 % en poids.

12. Systèmes de revêtement, contenant des masses de revêtement selon l'une ou plusieurs des revendications 1 à 11.

13. Systèmes de revêtement selon la revendication 12, **caractérisés en ce que** le système de revêtement est une peinture ou un vernis.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0802236 B1
- US 2011118406 A1
- DE 3412648
- EP 1142929 A
- EP 0157318 A
- EP 0157318 B1


**In der Beschreibung aufgeführte Nicht-Patentliteratur**

- **W. NOLL.** Chemie und Technologie der Silicone. Wiley-VCH Verlag GmbH & Co. KGaA, 1960